Europäisches Patentamt

European Patent Office

Office européen des brevets

(11) Publication number: **0 318 124**
**A2**

## EUROPEAN PATENT APPLICATION

(21) Application number: **88202684.2**

(22) Date of filing: **25.11.88**

(51) Int. Cl.4: **G06F 15/20**

The title of the invention has been amended (Guidelines for Examination in the EPO, A-III, 7.3).

(30) Priority: **26.11.87 IT 2276387**

(43) Date of publication of application:
**31.05.89 Bulletin 89/22**

(84) Designated Contracting States:
**AT BE CH DE ES FR GB GR IT LI LU NL SE**

(71) Applicant: **DATA MANAGEMENT S.p.A.**
**Viale Eginardo 29**
**Milano(IT)**

(72) Inventor: **Mostardi, Franco**
**Via Cecioni 16**
**Livorno(IT)**
Inventor: **Fileccia, Antonino**
**Via Cisanello 225**
**Pisa(IT)**

(74) Representative: **Raimondi, Alfredo, Dott. Ing.**
**Prof. et al**
**Studio Tecnico Consulenza Brevetti Piazzale**
**Cadorna 15**
**I-20123 Milano(IT)**

(54) **Joined syllables typewriting device.**

(57) The present invention relates to a syllable typewriting device comprising in combination at least one voltage supply, regulation and control unit, syllable encoding means, at least one unit for processing the signals input from the encoding means and output to the recording, display and typing means, at least one central control and signal processing unit, a plurality of storage devices connected together, means for joining the successive syllables and means for recording, display and/or typing, this combination being structurally and operationally organized to obtain a rapid storage by combinations of electrical signals corresponding to syllables with subsequent clear printing of full words.

Fig.2

## JOINT SYLLABLES TYPEWRITING DEVICE

It is known that a written record of what is being said is needed for courts, government and parliament offices or during congresses and it is also known that since the speed of speech is much greater than the normal speed of writing it is necessary to use abbreviated writing techniques such as shorthand or the like.

However, these devices for abbreviated writing which is encoded in symbols raise the serious problem that it must subsequently be retranscribed in full with serious problems of interpretation, loss of time and the need for highly skilled staff.

Machines are also known which receive as input encoded symbols, for instance shorthand symbols, and supply as output full graphic forms which take the form, however, of lines of separate syllables which then have to be appropriately joined together to provide words of full meaning.

This therefore raises the problem of providing a specialized device which receives as input encoded signals and supplies as output full words which anyone can read.

This technical problem is solved by the joint syllables typewriting device of the invention which comprises in combination at least one voltage supply, regulation and control unit, syllable encoding means, at least one unit for processing the signals input from the encoding means and output to the recording, display and typing means, at least one central control and signal processing unit, a plurality of storage devices connected together, means for joining successive syllables and means for recording, display and/or typing, this combination being structurally and operationally organized to obtain as output clear writing or the like. It is envisaged that this central control unit is formed by a microprocessor constructed using CMOS technology and internal 8-bit parallelism and by at least one integrated circuit for the generation of the data lines, the high and low address lines for the selection of the components with which to transfer the data and the control signals of the access timings to the memories and to the input/output means. There are, in particular, preferably three of these integrated circuits, the first of which is a bidirectional register for the creation of data lines and the second and the third are unidirectional registers for the creation of the address lines.

Moreover, the input/output signal processing member comprises at least one, preferably three, integrated circuits for reading the states of the encoding means, at least one decoding circuit driven by corresponding address signals and a unit combining the interfaces for connection to external devices such as printers and/or calculators.

The unit combining the interfaces comprises at least one memory storage circuit having as a timing signal a logic element of OR type placed between the selection signal SPRT and the timing signal ENEG.

It is also envisaged that in the device of the invention the supply unit comprises two regulator circuits for five and twelve volts respectively and a discrimination circuit for detecting a low charge level of the battery, subsequently generating a warning signal.

It is also envisaged that the supply unit is disactivated only by an order in combination with an address decoder activating a brief cut-off signal maintained by the D-type flip-flop member for the saturation of the transistors and the energization of the cut-off winding of the bistable relay so as to prevent erroneous cut-off of the device and the consequent loss of the data already recorded.

The plurality of memory devices comprises memories of the EPRQM and of the RAM types, respectively containing the operating system and the texts generated by the user, together with circuits for selecting the different memory blocks, these circuits forming a combinational network for the signals RESET, ME, AH3 and being themselves supplied by the holding voltage; this selection is carried out in two parts called "primary" and "secondary" respectively wherein the primary selection carried out by means of the combinational network eliminates unsupervised entries due to any spurious signals generated during the ignition and cut-off transients.

It is also envisaged that these encoding means are preferably formed by a keyboard or by means for detecting sounds corresponding to words with which it is possble to convert each sound corresponding to a syllable into combinations of electrical signals.

The keyboard is divided into two parts which are a mirror-image of one another and comprises a special "joining" key placed in the centre of the keyboard which, if actuated, generates a signal which is detected by a unidirectional memory storage register which establishes a signal with a predetermined logic value which is supplied to the central control unit via the data lines.

This signal is compared with a reference logic value for the determination and performance of the joining operation which takes place by the cancelling the space between the syllables keyed in with the encoding means.

Further details are given in the following detailed description of an embodiment made with reference to the attached drawings, in which:

Fig. 1 is a plan view of the exterior of the device;

Fig. 2 is a logic block diagram of the embodiment of the device;

Fig. 3 is a block diagram of the circuit forming the device of Fig. 2;

Fig. 4 shows the structural detail of the central unit;

Figs. 5 and 5a show the structural details of the memory units;

Fig. 6 shows the structural detail of the input and output unit;

Fig. 7 shows the structural detail of the unit interfacing with external devices;

Fig. 8 shows the structural detail of the supply device;

Fig. 9 shows the structural detail of the regulator unit and

Fig. 10 is a diagram of the logic division of the keyboard.

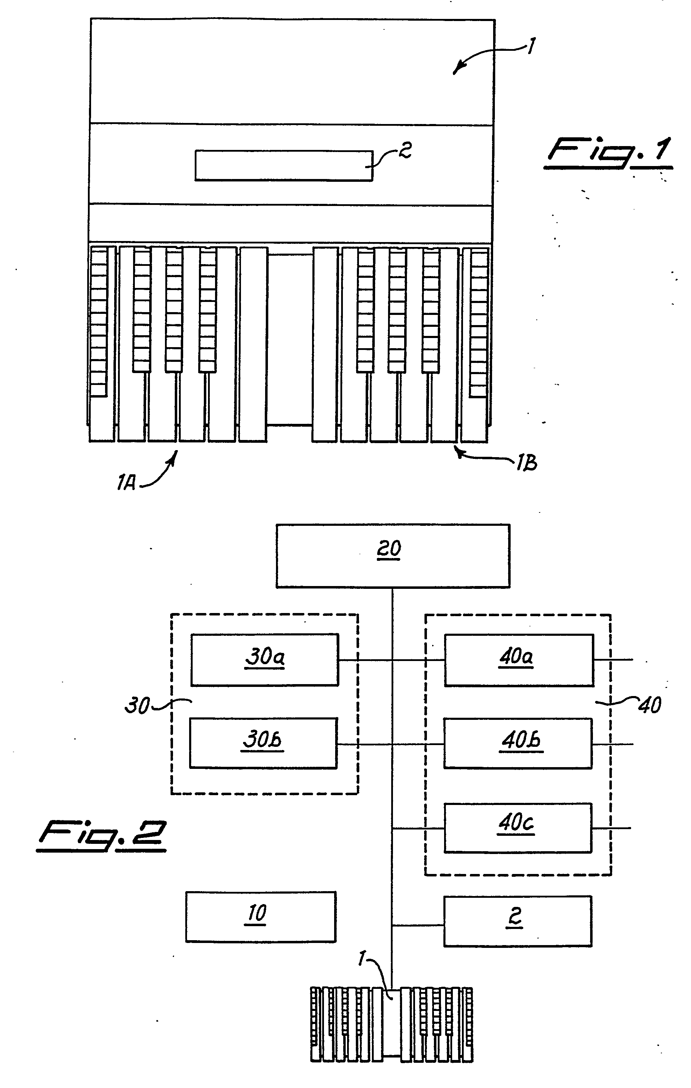

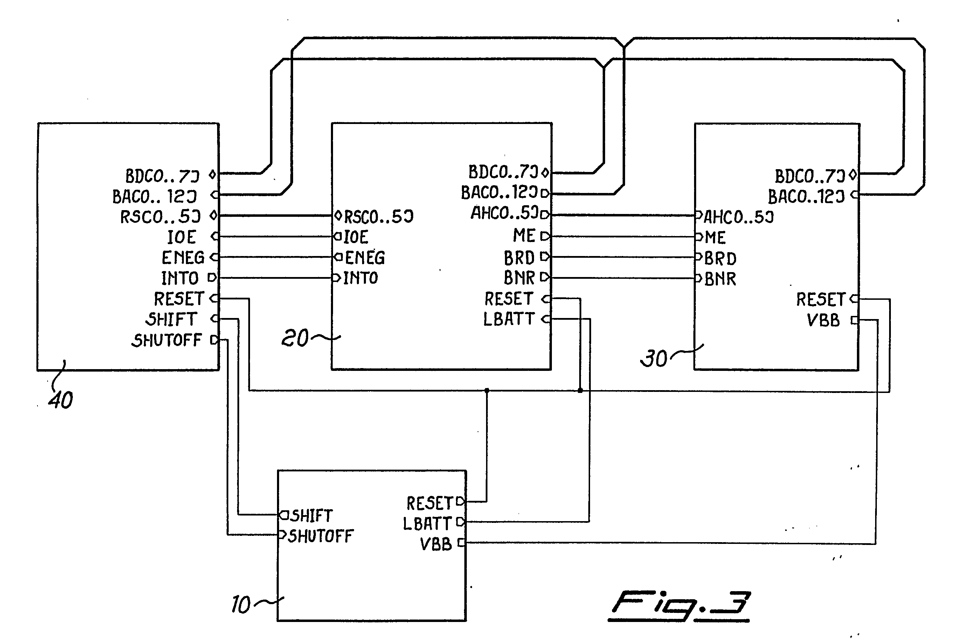

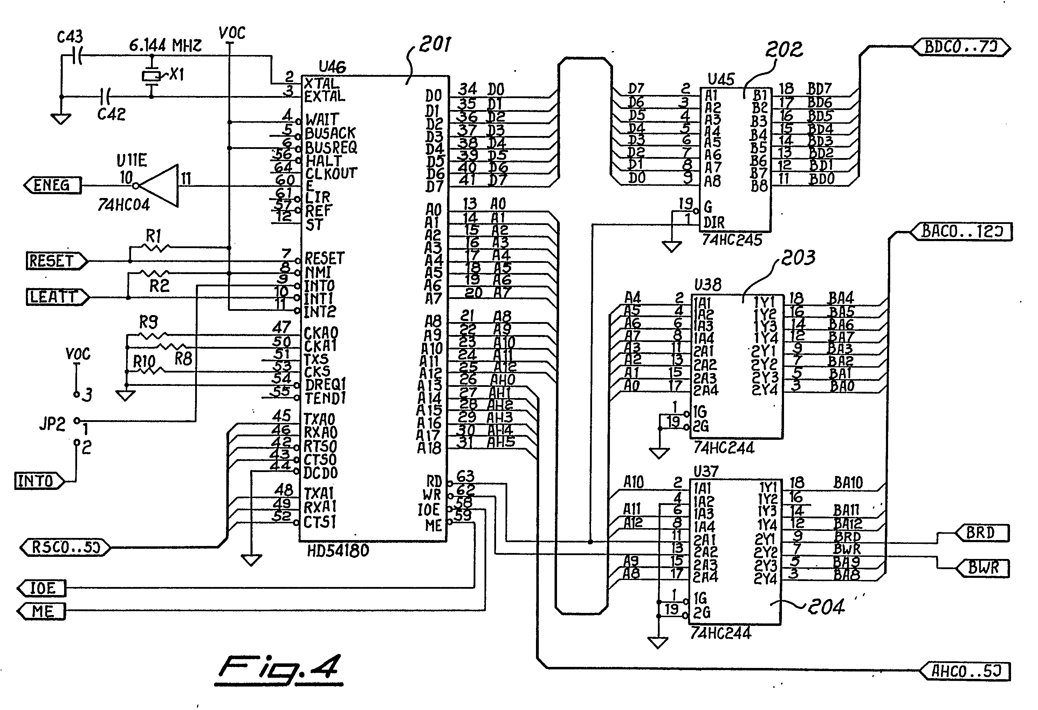

With reference to Fig. 1, the device of the invention is provided externally with a special keyboard of the pianoforte type 1 divided into two portions which are mirror images of one another and are slightly separated (1a and 1b) comprising 10 keys, 6 of which are white and 4 are black.

The user keys in combinations on the keyboard following an appropriate rule under which each of these corresponds to a specific syllabic group; the machine translates each combination keyed in into the corresponding syllable of the Italian language by methods which will be explained below; it is also possible to key in the combinations such that the corresponding syllables are joined up to form a whole word.

Above the keyboard there is a liquid crystal display 2 with two lines of 40 characters each; the lower line displays the combinations translated into the corresponding syllables and/or words; the upper line displays messages to inform the user of the operational state of the terminal. The supply connector is on the rear of the device (not shown): a 25-pin jack connector for local connection to external devices (for example a printer); a further 9-pin jack connector for connection to a further external device (for example a computer) according to the standard RS232; these external devices can receive electrical signals representing the syllables corresponding to the combinations keyed in from the device.

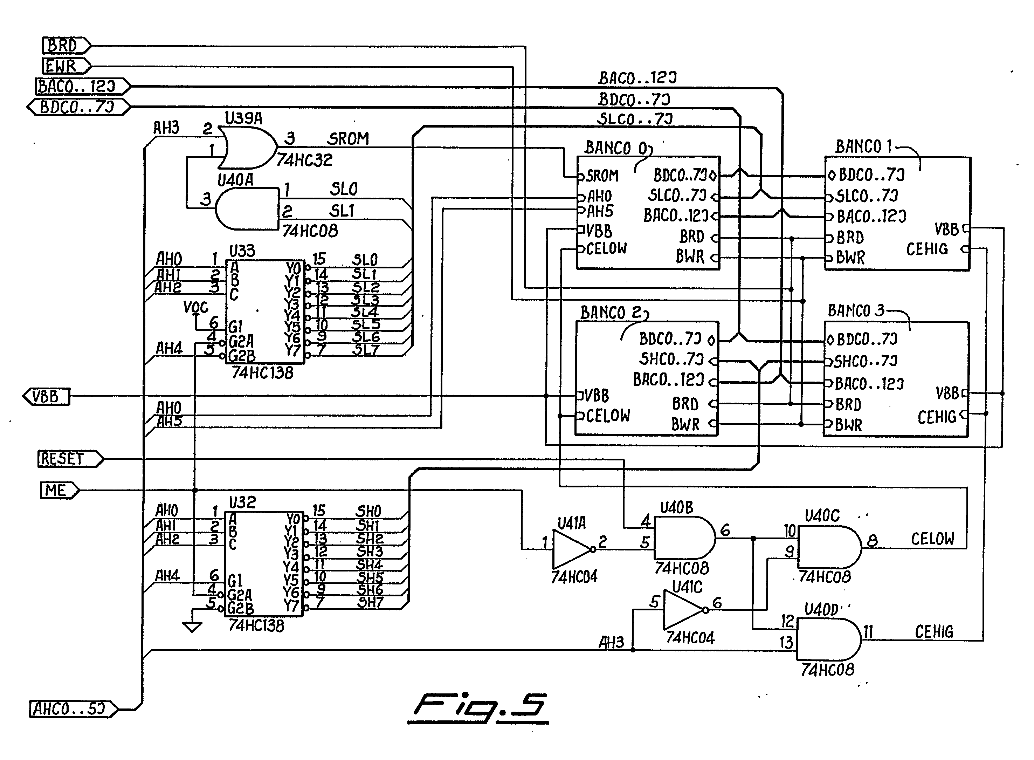

With reference to Figs. 2 and 3 it is noted that the electronic diagram of the stenographic terminal is formed by four main blocks: the block 10 "SUPPLY" provides the general supply for the device as a whole both in respect of normal operation and, through the voltage VBB, for conserving, when the terminal is off, the information contained in the RAM memory 30b; it also provides some important signals needed for the operation of the device, such as RESET for initialization on ignition, LBATT for informing the central unit that the battery charge is insufficient.

It is noted that the supply voltages have not been shown, with the exception of VBB in view of its particular importance. The two signals SHIFT and SHUTOFF are used to manage the ignition and the shutdown of the terminal.

The block 20 "CENTRAL UNIT" carries out all the system control functions and represents the management of the system as a whole. It generates the data lines BD(0...7) for the transfer of the data from and to the other blocks, the high address lines AH(0..5) for selecting the devices with which to transfer the data, and all the control signals for the access timimgs to the memories and to the I/O (ME, BRD, BWR, IOE, EGE). It also generates the lines RS(0...5) grouping the signals relating to the interfaces RS232.

The block 30 "MEMORY" groups, together with the selection logic, both the EPROM memory 30a containing the operating system and the RAM memory 30b for the preservation of the text organized in FILE.

The block 40 "INPUT/OUTPUT" (I/O) contains, together with its associated selection logics, all the interfaces for the control of the internal and external input/output devices; it is noted that the internal devices are the keyboard and the liquid crystal display, the former being an input and the latter an output. As regards the external devices, the I/O block 40 provides two interfaces of serial type 40a and 40b and a parallel interface 40c.

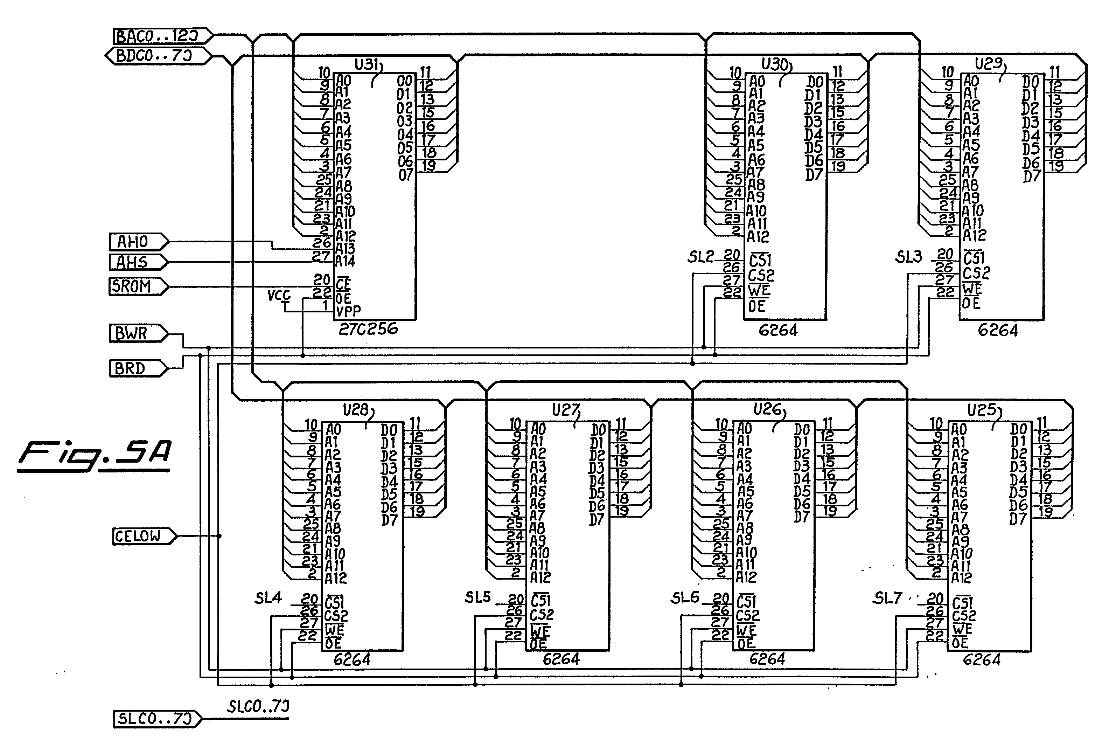

The block 20 "CENTRAL UNIT" (Fig. 4) essentially comprises the microprocessor 201 and the integrated circuits 202, 203 and 204 for the generation of the data lines BD(0...7) and the address lines BA(0...12) and AH(0...5).

The microprocessor used is constructed using CMOS technology, with 8-bit internal parallelism and makes access possible to a maximum of 512 KB. The internal clock generator is driven by a quartz (X1) of 6,144 MHz which determines the system clock frequency of 3,072 MHz. This quartz allows the achievement of an elementary cycle (T-state) of about 325 nsec. to which there corresponds a machine cycle (MC) of approximately 1 microsec. (1 MC = 3 T-STATE) for memory access.

In the case of reading/writing on external I/O, the internal logic of the microprocessor automatically inserts from 1 to 6 "stand-by" cycles as a function of the programming of one of its registers. In the present case 2 "stand-by" cycles are inserted and therefore an external I/O operation lasts approximately 1.6 microsec. A useful signal supplied by the microprocessor is E (pin 60) which corresponds to ENEG in the board, which has a timing synchronous with CLKOUT, this signal being used for timimgs relating to the CENTRONICS (U44) register and for the display 2.

The microprocessor has 12 external and 8 internal cut-off sources. Among these INT1 is used for the detection logic of the low battery charge level condition (signal LBATT from the SUPPLY block) and INTO is provided to manage any signal external to the block in question. The jumper JP2 allows the actuation or non-actuation of the function depending on whether it is connected to VCC (5 volts) or to the external signal INTO.

The microprocessor contains internally an asynchronous serial communication interface with two channels which can be separately programmed as regards word length, type of parity and speed of transmission.

The signals TXAO, RXAO, RTSO/, CTSO/ (relative to channel O) and TXA1, RXA1, CTS1/ (relative to channel 1) form the bidirectional line RS(0...5) which emerges from the block to be handled by the subsystem "I/O".

The microprocessor also has two channels DMA provided with external control systems; those relating to the first channel DREQQ/ and TENDO/, since they are multiplexed with other signals, normally output signals, are connected to earth via resistors; in the case of those of the second, DREQ1/ is earthed and TEND1/ is not connected.

The data line BD (0...7) is controlled by means of the integrated circuit U45.

The pin DIR is connected to the signal RD/ (read) of the microprocessor and controls the direction of transfer of the data, while the pin G/(DATA ENABLE) is connected to earth making the register logically transparent. The data line registered in this way is formed by the signals BD(0...7).

The address line of the microprocessor (signals AO..A18) is divided logically into two parts A0..A12 (corresponding to a space of 8 KB) and A13.. A18; these latter form the line AH(0..5) which, switched with no interface directly to the output of the block, is used to select the memories.

In contrast, the addresses A0...A12 are controlled by means of two integrated circuits U37 and U38 (both 74HC244); the address line obtained, BA(0...12) thus emerges from the block.

It is lastly noted that two sections of U37 are used to record the read and write signals, obtaining BRD and BWR respectively.

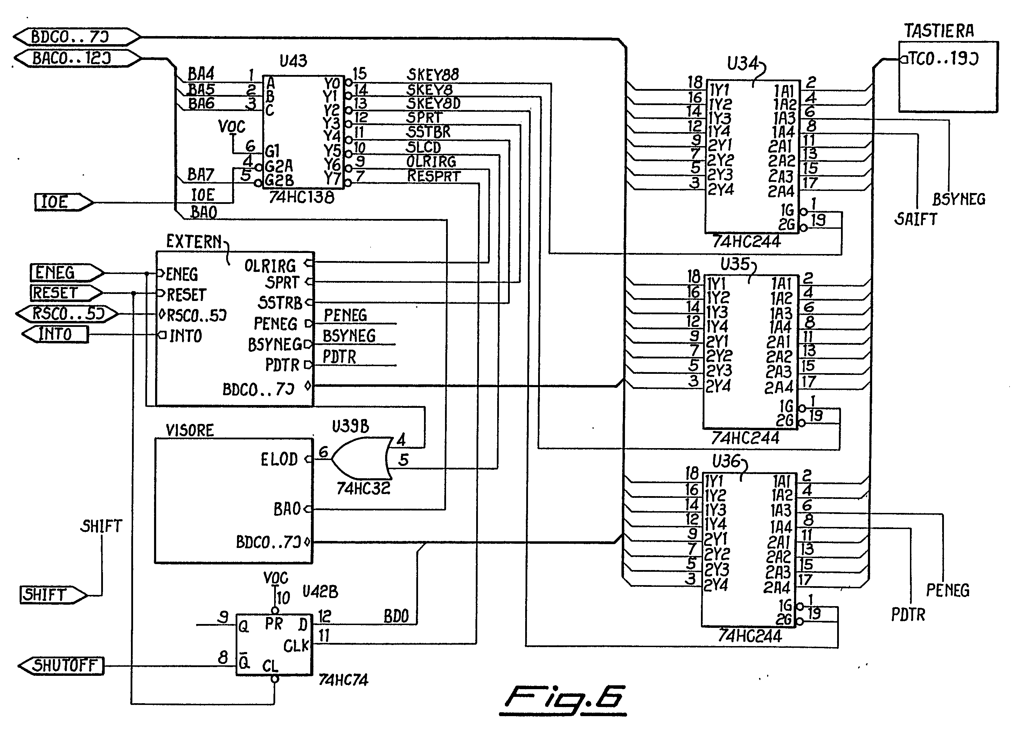

The block 30 "MEMORY" (Fig. 5) contains the circuitry for selection of the four blocks of 64 KB each called BANK 0, 1, 2, 3.

Selection is split into primary and secondary.

Primary selection is carried out through some sections of the integrated circuits U40 and U41 (AND and NOT gate), secondary selection through U32 and U33 (decoders from 3 to 8 lines).

Primary selection, using the address AH(3) and the signals RESET and ME generates the signals CELOW and CEHIG for discrimination between odd and even banks.

Moreover, it superintends the very important function of total deselection of all the banks during the ignition and cut-off transients of the terminal, in this way preventing any cycles of spurious writing from corrupting the information contained in the RAMs. All this is carried out by supplying the integrated circuit U40 with the holding voltage (VBB) and supplying the RESET signal to the gate U40B which inhibits the signal ME (memory enable) during the above-mentioned transients.

Secondary selection discriminating between the banks 0, 1 and 2, 3 takes place via AH(4) which takes part directly as an enabling signal for the decoders U33 and U32 active low in the first case and active high in the second case; the addresses AH(4) which take part directly as an enabling signal for the decoders U33 and U32 active low in the first case and active high in the second case; the addresses AH(0..2) are, however, common.

The outputs of the two decoders U40 and U41 respectively form the two selection lines SL (0...7) and SH (0...7); the first is active for all the accesses in the address spaces in which AH (4) is 0, the second in those in which AH (4) is 1.

The block in question also supplies the selection signals for the EPROM (contained in BANK 0). These are SROM and AH5; the first is obtained by adding (OR U39A) AH3 to the product (AND, U40A) of SLO and SL1; it follows that SROM is active when AH4, AH3, AH2, AH1 are 0 while AHO can be 0 or 1; consequently SROM decodes two address spaces of 16 KByte.

The bank 0 (Fig. 5a) contains the 32 KB EPROM memory (U31; 27L256) containing the operating system of the device and 6 chips of RAM U30...U25 (6264) which, together with the other chips contained in the other banks, form the RAM Disk where the text is stored in the form of files. It is noted, as mentioned in the description of the "MEMORY" block, that the EPROM address spaces are unconnected; discrimination takes place through the AH5 system address connected to the EPROM A14 address. All the memories, both EPROM and RAM, are connected in parallel both to the data line BD(0...7) and to the address line BA-(0...12). The "output consent" pins of all the chips are connected in parallel to the signal BRD (read) while the "writing consent" pins of all the RAMs are connected to the signal BWR (write). All the RAMs are supplied by the holding voltage VBB.

With reference to Fig. 6, the microprocessor has the possibility of addressing an I/O space of 64 KB separate from the memory space by means of the signal 10E/.

Selection takes place through U43 (74HCT 138, 3 to 8 line decoder) driven by the address signals BA4--BA7 and by 10E/. It is noted that all the selection signals generated in this way are active low. The input/output devices contained in the present block are the liquid crystal display (LCD) 2 and the keyboard 1. The LCD display 2 used is the model known by the trade name of LM018 dot matrix, containing internally LSI circuits for control, sharpening and display of data and for interfacing with a microprocessor board.

The flow of data from and to the LCD takes place through the data line BD (0...7) while the control signals are formed by BAO (selection of data register, command register, both within the display) and ELCD for the timing of the data. This latter signal is generated from SLCD and thus conditioned by ENEG via U39B.

The keyboard 1, from the point of view of acquisition, is logically divided into three sections, i.e.: section 6S grouping the keys 1...6; section 8 grouping the keys 7...14; section 6D grouping the keys 5...T20.

It is noted that the numbering of the keys is progressive, from left to right, and that the generic key "n" corresponds to the signal Tn-1, each of the 3 sections leads respectively to the three integrated circuits U34, 35 and 36 (74HCT 244, octal tri-state buffer) connected as output to the data line BD(0...7). Selection takes place through the signals SKEY65, SKEY8 and SKEY6D respectively.

Consequently, the acquisition of the keyboard state takes place with 3 successive readings. It is noted that the signals from the individual keys (T0... T19) present at the connector J2 are connected to the voltage VCC (5 volts) via individual resistors of 10 Kohms (grouped in integrated resistors of SIL type, not shown in the drawings) such that a key which is not depressed corresponds to the logic state "1".

SHIFT is an input signal for the block in question which is used to detect the closure of the key placed on the front part of the machine. This key is normally open and when closed transfers a logic "0" to the input of a section of the U34. Acquisition takes place by reading at the address SKEY6S-(00:OF)HEX the state of the bit 7 of the date line. The acquisition of the SHIFT signal is used by the operating system to switch the operation of the device from the text input mode to the command mode.

SHUTOFF is a generic output signal obtained by storing the state of the bit 0 of the data line via the section B of the U42 (74HCT74, dual D-type flip-flop). The presetting of the signal takes place by writing the state of the bit 0 of the data line at the address RESPRT (70:7F HEX).

It is noted that the pin CL2/ (Clear) is connected to the RESET/ general of the board which ensures that the signal is configured low on ignition and after every RESET.

The SHUTOFF signal is generated for program control when the user, in the command input stage, keys in the END WORK stroke; SHUTOFF is thus used in the supply board for the actuation of the shutdown of the terminal.

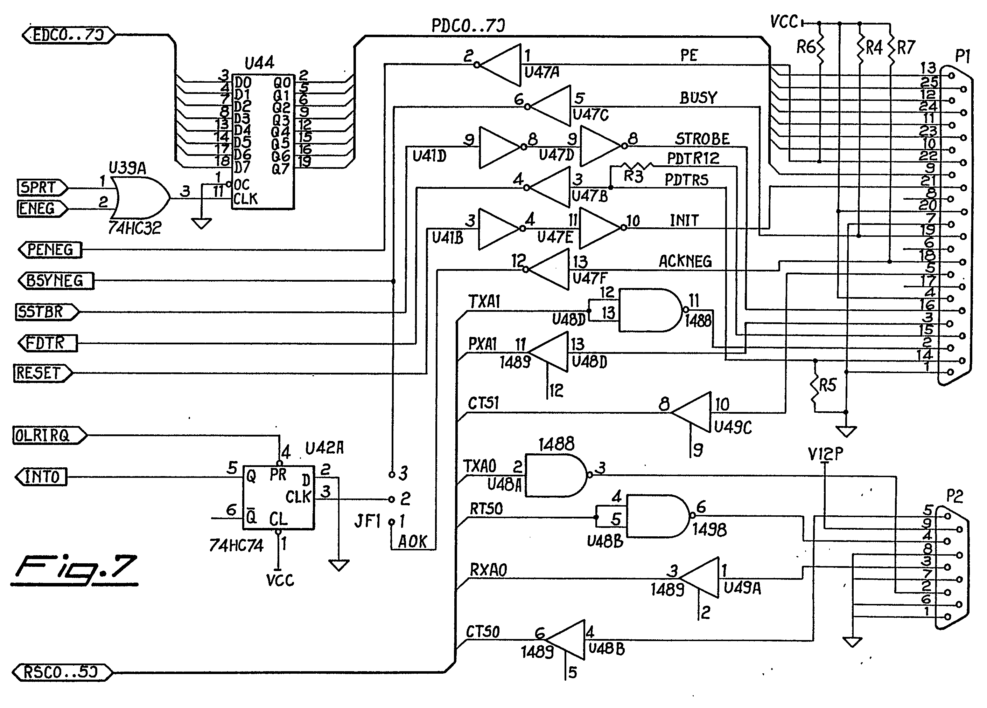

Fig. 7 shows the block containing the interfaces for connection to external devices such as printers and computers.

The CENTRONICS interface is of the unidirectional type since it is envisaged that it will be used only as an output element to the outside for connection to peripheral devices of the "receiver" type such as a printer for example.

The data directed externally, present on the data line, are stored and made available to the peripheral via U44 (74HCT 374, octal D-type flip-flop) having as a writing consent signal the OR between the selection signal SPRT and ENEG. At the output of the U44 the 8 bits are called PD(0...7) (P-BUS) and are transferred without further conditioning to the output connector P1.

The other signals which make up the interface are present in the same connector, i.e.:

STROBE (P1-16): is an active low signal of a duration of approximately 650 nsec. obtained from SSTRB through a double inversion, for reasons of separation, formed by two sections of U41 and U47; it is used to inform the peripheral that the datum present on the P-Line is valid.

ACKNEG (P1-18): is an input for the board and represents the ACKNOWLEDGE signal coming from the peripheral showing that the latter has acquired the datum present in the P-bus.

This signal may be connected through the pins 1 and 2 of the jumper JP1 at the input of a D-type flip-flop U42 to generate an interrupt request to the CPU. In this case it is necessary to connect the pins 1 and 2 of the jumper JP1 (see block "CENTRAL UNIT") so as to switch over the output of the flip-flop to the input INTO/ and the microprocessor.

It is noted that the interrupt request remains active until the flip-flop is reset by activating the signal CLRIRQ.

BUSY (P1-19): is an input for the board and indicates, when in the logic state "1", that the peripheral is engaged in internal operations and is not thus available to receive data.

This signal, regenerated and negated through a section of U47 (74HC14: hex inverting Schmitt Trigger) is switched over to the input of a section of the U34 - see block I/O - (and can therefore be acquired at the same time as the section 6s of the keyboard) and to the pin 3 of the jumper JP1 making it able, in the same way as and in place of ACKNEG, to generate an interrupt request to the microprocessor.

PE (P1-22): is a general input which indicates, in the case of connection to a parallel printer, when in the logic state "1", the absence of paper or, more generally, an error condition. The acquisition of the signal, regenerated and negated via a U47 section takes place simultaneously with the section 6D of the keyboard.

PDTR5 is an input typically connected to the +5 volt output of a parallel printer and used as such to detect its presence.

As an alternative, it is possible to use PDTR12 for signals with a maximum amplitude of 12 volts. The signal, regenerated and negated via a section of U47, has the name of PDTRW and can be acquired simultaneously with the section 6S of the keyboard.

INIT (P1-21): is an output obtained by inverting, via U41, the Reset signal for the first time and inverting it again with a section of U47.

It can be connected to the input INIT (RESET IN) of a parallel printer.

It is noted that all the signals belonging to the CENTRONICS group are electronically separate from the remainder of the board though only two integrated circuits: U47 and U44.

The two interfaces RS232 are obtained from the bidirectional line RS(0...5) using the integrated circuits U48 and U49 (of the 1488 and 1489 type respectively); the former are designed to convert the levels of the output signals (TXAO, RTSO, TXA1) in the range +/- 10 V (as prescribed in the standard RS232C) and the latter switch over the input signals (RXAO, CTSO, RXA1, CTS1) in the TTL range.

The signals of the channel 0 (TXAO, RXAO, RTSO, CTSO) are available on the external 9-pin connector P2, while those of the channel 1 (TXA1, RXA1, CTS1) are available on the external 25-pin connector P1.

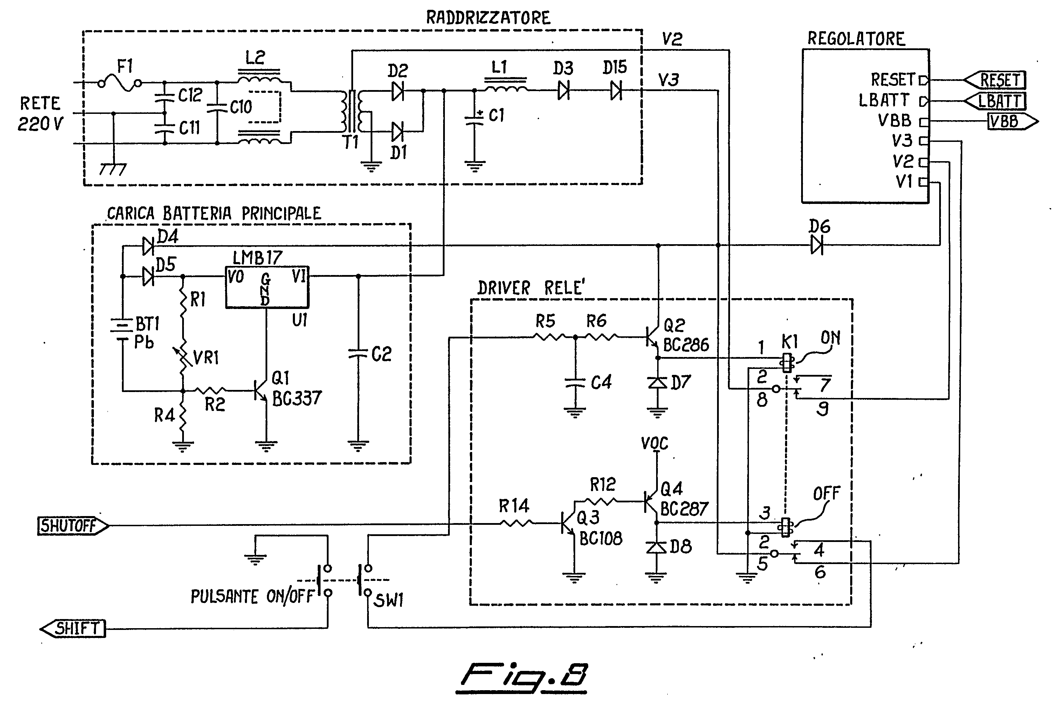

With reference to Fig. 8, the supply block provides the supply voltages of the device as described below:

VCC: 5 volts, main supply.

VBB: Close to 5 volts in the case of active operation, and approximately 3.5 volts when holding.

V12P: 12 volts positive for the supply of the drivers RS232 (U48 and U49).

V12M: 12 volts negative for the same use.

The following control signals are supplied:

RESET: supplies the ignition reset and when there is no supply to the rest of the system.

LBATT: an active low output which indicates the low charge level of the main battery.

SHIFT: is an output which reproduces the state of the command keys (0: pressed).

It also receives the control signal SHUTOFF which is an input for the control of the shutdown of the system which is issued by a sequence of programmable instructions to avoid accidental shutdown.

The main power source is the 220 volt mains and, failing this, a lead battery of 8 V.

The mains voltage, filtered by the capacitors C10:C12 and the impedance L2, is lowered by the transformer T1, then rectified and chopped until the voltage of approximately 12 V is obtained at the cathode of the drop diode D15. The voltage at the terminals of C1 is used to supply the main battery charger (formed by U1, LM317, voltage regulator) which supplies the lead battery in buffer mode.

The potentiometer VR1 is designed for the calibration of the battery charger. This ensures that the voltage at the battery terminals is approximately 9 volts; in these conditions, if the battery is fully charged, the current absorption is approximately zero.

In the case of a mains supply, the diode D5, forwardly biased, allows the passage of current to the battery which is thus charged; the diode D4 is cut off in this case.

When there is no mains supply, the diode D5 is cut off, inhibiting current returns to U1, while D4, now forwardly biased, allows current to flow from the battery to the remainder of the board.

The voltage V1 for the recharging of the Nickel-Cadmium battery contained in the Regulator block is generated through D6.

The transformer has on the secondary a 12 volt output (V2) which is connected to the Regulator block.

Ignition and shutdown are achieved by the use of a bistable relay 80 provided with 2-way 2-position contacts. The first way, contacts 7, 8, 9, sections the supply device V2, while the second, contacts 4, 5, 6, sections the main supply V3.

The ON winding of the relay is supplied by the transistor Q2 which is driven by the voltage present at the terminals of the capacitor C4 charged by pressing the command key.

It is noted that when switching has taken place, any subsequent action on the key has no effect.

The OFF winding of the relay is supplied by the pair of transistors Q4 and Q3, the latter driven by the SHUTOFF signal from the block I/O, active at logic level "1".

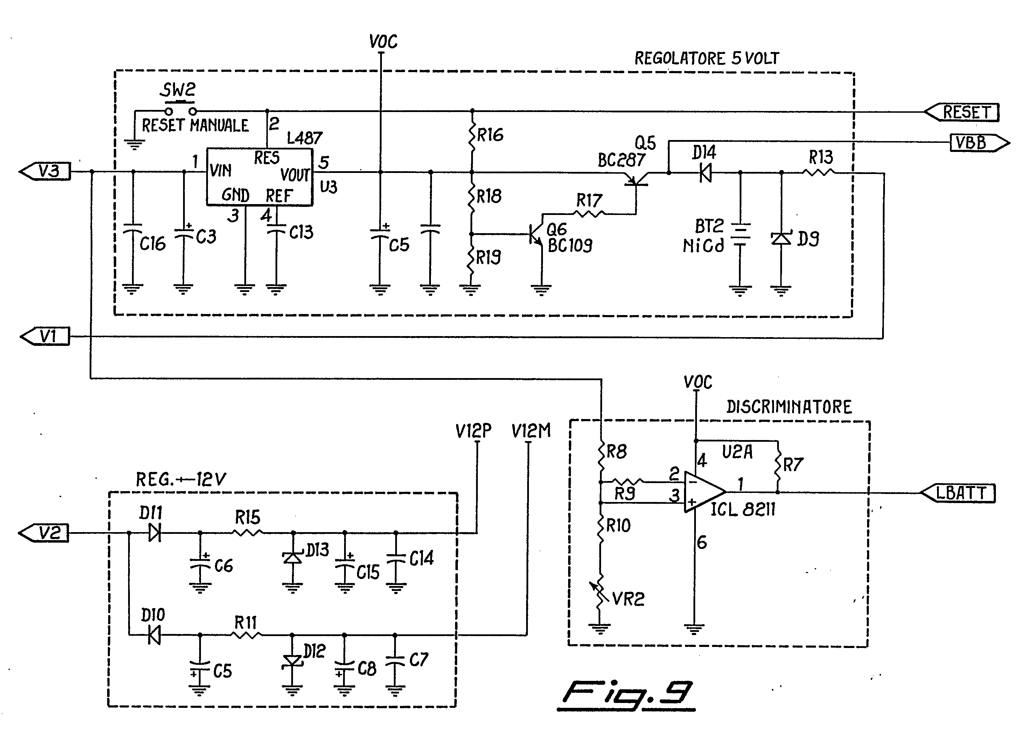

The regulator block (Fig. 9) is formed by a 5-volt regulator (VCC), a +12 volt regulator (V12P and V12M) and by a voltage discriminator for the generation of the signal LBATT.

The voltage VCC is obtained, from the voltage V3, by the regulator L487 which also supplies the RESET signal on ignition and on all occasions when the output voltage falls below the threshold of 4.85 volts.

The secondary nickel-cadmium battery continuously receives a holding voltage which is equal to approximately 1/10 of its nominal capacity. The function of the Zener diode D9, in parallel with the battery, is to protect against any overvoltages.

The separation between VCC and VBB is formed by the switch formed by two transistors Q6 and Q5 and by the diode D14. In the presence of VCC, the transistor Q6 is conductive and biases Q5 so that VBB is equivalent to VCC less the drop at Q5; in these conditions, the diode D14 inhibits the flow of current to the NiCd battery.

In the holding mode Q5 is cut off while D14, forwardly biased, allows the passage of current from the battery to the RAMs.

The generation of the signal LBATT is the task of U2 (ICL 8211, low power comparator) which switches downwardly when the voltage at the terminals of its input 3 drops below a threshold which can be adjusted by the potentiometer VR2; the resistor R9 creates a hysteresis in the switching of approximately 100 mV.

The regulation of VR2 is provided such that the switching of the comparator takes place when the voltage at the terminals of the lead battery drops below 7.45 volts, corresponding to a voltage of 6.7 volts input to the regulator U3. The voltage V2 is used for the generation of the two voltages V12P and V12M obtained by simple rectification and chopping in view of the low current requirements needed.

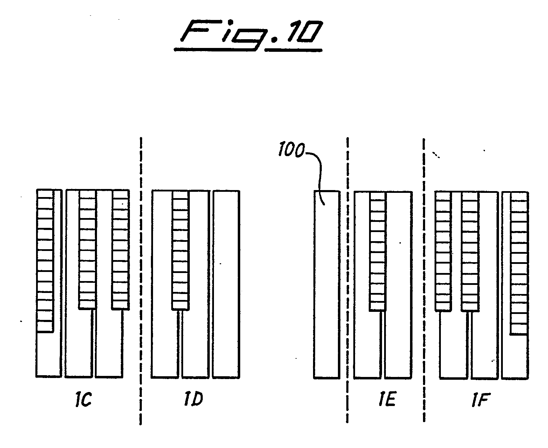

With reference to Fig. 10, it is noted that the keyboard of the device is logically divided into four series of keys 1C, 1D, 1E and 1F plus a special "joining" key 100.

The position of the operator's hands on the keyboard is such that each finger can depress two adjacent keys only, i.e. with the left-hand little finger on the first two keys, the left-hand ring finger on the next two and so on. The two keys assigned to each finger must never be pressed simultaneously when they are of different colours, i.e. only the left or right thumb can act simultaneously on the white keys corresponding to them. The keying of "è" and some other special symbols are an exception.

The operator woeks by making a series of strokes on the keyboard, each of which consists in the simultaneous keying of several keys (combination), respecting the above rules, until both the hands are removed from the keyboard. Each sequence of strokes corresponds to one of the four phonetic groups into which an Italian syllable can be divided, i.e. initial 1C, medial 1D, vocalic 1E and connective 1F, and consequently a precise phonetic element corresponds to each combination of the various sequences. To generate an Italian syllable the vocalic group is compulsory, while the medial group is only of meaning when there is an initial group. A stroke on the keyboard comprising the series 1E thus corresponds to a syllable. Where possible, the strokes not including the series 1E are also interpreted alphabetically. It is also possible to generate numbers made up of several digits, by keying with the left hand the last two keys of the corresponding half-keyboard and then keying in the individual digits one by one with the right hand, removing only this hand each time and finally leaving the keyboard completely. For alphabetical keying a mechanism is provided which allows the individual syllables to be joined to form a word. When a stroke on the keyboard includes the depression of the joining key 100 the corresponding syllable is joined to the syllable generated by the subsequent stroke (since it forms part of the same word as far as the operator is concerned). Vice versa, if the key 100 is not depressed between the two syllables a space is generated. The device also makes it possible to correct keying errors by the operator in some cases. If the latter depresses a pair of black and white keys corresponding to the same finger at the same time only the white key is taken into account: statistically the error relates to the black key.

The device can also operate by two operating modes: the text input mode and the command input mode, the latter making it possible to convert the device from a typewriter to a computer; the command operating mode is obtained by depressing, when the terminal is on, the ignition button. In this case the combinations created by the keyboard are interpreted by the operating program as commands and the lower line of the display is reserved for the descriptive display of the command and possibly errors in the case of keying of incorrect commands.

## Claims

1. A syllable typewriting device, characterized in that it comprises in combination at least one voltage supply, regulation and control unit, syllable encoding means, at least one unit for processing the signals input from the encoding means and output to the recording, display and typing means, at least one central control and signal processing unit, a plurality of storage devices connected together, means for joining the successive syllables and means for recording, display and/or typing, this combination being structurally and operationally organized to obtain as output clear writing or the like.

2. A device as claimed in claim 1, characterized in that the central control unit is formed by a microprocessor constructed using CMOS technology and internal 8-bit parallelism and by at least one integrated circuit for the generation of the data lines, the high and low address lines for the selection of the components with which to transfer the data and the control signals of the access timings to the memories and to the input/output means.

3. A device as claimed in claims 1 or 2, characterized in that there are preferably three of these integrated circuits, the first of which is a bidirectional register for the creation of data lines and the second and the third are unidirectional registers for the creation of the address lines.

4. A device as claimed in claim 1, characterized in that the input/output signal processing unit comprises at least one, preferably three, integrated circuits for reading the states of the encoding means; at least one decoding circuit driven by corresponding address signals and a unit combining the interfaces for connection to external devices such as printers and/or computers.

5. A device as claimed in claims 1 and 4, characterized in that the unit combining the interfaces comprises at least one memory storage circuit having as a timing signal a logic element of OR type placed between the selection signal SPRT and the timing signal ENEG.

6. A device as claimed in claim 1, characterized in that the supply unit comprises two regulator circuits for five and twelve volts respectively and a discrimination circuit for the detection of the low charge level of the battery, subsequently generating a warning signal.

7. A device as claimed in claims 1 and 6, characterized in that the supply unit is disactivated only by an order in combination with an address decoder activating a brief cut-off signal maintained by the D-type flip-flop for the saturation of the transistors and the energization of the cut-off winding of the bistable relay so as to prevent erroneous cut-off of the device and the consequent loss of the data already recorded.

8. A device as claimed in claim 1, characterized in that the plurality of memory devices comprises memories of the EPROM and of the RAM types, respectively containing the operating system and the texts generated by the user, together with circuits for selecting the different memory blocks, these circuits forming a combinational network of the signals RESET, ME, AH3 and being themselves supplied by the holding voltage.

9. A device as claimed in claims 1 and 8, characterized in that this selection is carried out in two parts called "primary" and "secondary" respectively and in that the primary selection carried out by means of the combinational network eliminates unsupervised entries due to any spurious signals generated during the ignition and cut-off transients.

10. A device as claimed in claim 1, characterized in that these encoding means are preferably formed by a keyboard or by means for detecting sounds corresponding to words with which it is possible to convert every sound corresponding to a syllable into combinations of electrical signals.

11. A device as claimed in claims and 10, characterized in that the keyboard is divided into two parts which are a mirror-image of one another and comprises a special "joining" key placed in the centre of the keyboard which, if actuated, generates a signal which is detected by a unidirectional memory storage register which establishes a signal with a predetermined logic value which is supplied to the central control unit via the data line.

12. A device as claimed in claims 1 and 11, characterized in that this signal is compared with a reference logic value for the determination and performance of the joining operation.

13. A device as claimed in claims 1 and 12, characterized in that this joining operation takes place by the cancellation of the space between the syllables keyed in with the encoding means.

*Fig.1*

*Fig.2*

Fig.3

EP 0 318 124 A2

_Fig.4_

EP 0 318 124 A2

Fig.5

EP 0 318 124 A2

Fig. 5A

EP 0 318 124 A2

Fig.6

Fig.7

RADDRIZZATORE

REGOLATORE

RETE 220V

CARICA BATTERIA PRINCIPALE

DRIVER RELE'

SHUTOFF

PULSANTE ON/OFF

SHIFT

SW1

Fig.8

EP 0 318 124 A2

REGOLATORE 5 VOLT

VOC

SW2
RESET MANUALE

L487

RES
VIN    VOUT
GND    REF

RESET

VBB

R16
R18
R19

Q5
BC287
R17
Q6
BC109

D14

BT2
NiCd

D9

R13

V3
V1

C16  C3  C13  C5

REG.←−12V

D11  R15
D13  C15  C14
C6

D10  R11
D12  C8  C7
C5

V2

V12P  V12M

VOC

DISCRIMINATORE

R8
R9
R10
VR2

U2A
R7
ICL 8211

LBATT

Fig.9

EP 0 318 124 A2

# Fig.10

1C    1D    100    1E    1F